(19) Europäisches Patentamt

European Patent Office

Office européen des brevets

(11) **EP 1 216 747 B1**

(12) **EUROPÄISCHE PATENTSCHRIFT**

(45) Veröffentlichungstag und Bekanntmachung des Hinweises auf die Patenterteilung:
**03.11.2004 Patentblatt 2004/45**

(51) Int Cl.⁷: **B01F 5/06**, B29B 7/32

(21) Anmeldenummer: **01129214.1**

(22) Anmeldetag: **10.12.2001**

(54) **Statischer Mischer**

Static mixer

Mélangeur statique

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **20.12.2000 DE 10063485**

(43) Veröffentlichungstag der Anmeldung:
**26.06.2002 Patentblatt 2002/26**

(73) Patentinhaber: **Bayer Technology Services GmbH 51368 Leverkusen (DE)**

(72) Erfinder: **Schuchardt, Heinrich 51373 Leverkusen (DE)**

(56) Entgegenhaltungen:
**US-A- 4 062 524       US-A- 5 378 063**
**US-A- 5 484 203       US-A- 5 620 252**

**Beschreibung**

Die Erfindung betrifft einen Statischer Mischer bestehend wenigstens aus einem Gehäuse mit einer Vielzahl von Mischerelementen, die in dem Gehäuse gestapelt angeordnet sind. Die Mischerelemente sind kammförmige ebene Elemente und sind mit einem Mittelsteg versehen, auf dem beidseitig mindestens je zwei Zähne angebracht sind

Zum Mischen von Flüssigkeiten werden vielfach statische Mischer eingesetzt: Eine Pumpe drückt die Flüssigkeit dabei durch ein mit statischen Mischereinbauten versehenes Rohr.

Beispielhaft für statische Mischer seien die zwei folgenden Vorrichtungen genannt:

Bei den sogenannten Kenics-Mischern (siehe "Mischen beim Herstellen und Verarbeiten von Kunststoffen", Herausgeber VDI Ges. Kunststofftechnik, VDI-Verlag 1986, S. 238-241) wird die Flüssigkeitsströmung des Mischgutes durch ein im Rohr eingebautes Trennblech in Teilströme geteilt. Dieses Trennblech ist um die Rohrachse tordiert. In jedem der Teilströme entsteht eine wirbelförmige Strömung, die zur Umverteilung der Flüssigkeit im Querschnitt des Rohres führt. Mehrere solcher Mischelemente werden in der Praxis hintereinander angeordnet, um die Flüssigkeit immer wieder neu zu teilen und ein hinreichendes Mischergebnis zu erzielen. Eine befriedigende Mischung wird typischerweise erst nach 10 -12 Mischelementen erreicht.

Die sogenannten SMX-Mischer (vgl. Patentschrift US 40 62 524) bestehen aus zwei oder mehr zueinander senkrecht stehenden Gittern von parallelen Blechstreifen, die an ihren Kreuzungspunkten miteinander verschweißt sind und in einem Winkel gegen die Hauptströmungsrichtung des Mischgutes angestellt sind, um die Flüssigkeit in Teilströme zu teilen und zu mischen. Der Herstellaufwand für diese Mischer ist wegen der vielen zu tätigenden Schweißverbindungen sehr hoch. Ein einzelnes Mischelement ist als Mischer ungeeignet, da eine Durchmischung nur entlang einer Vorzugsrichtung quer zur Hauptströmungsrichtung erfolgt. Deshalb müssen mehrere Mischelemente, die zueinander um 90° verdreht sind, hintereinander angeordnet werden. Eine gute Durchmischung erfordert typischerweise 5 bis 6 Elemente.

Dies lässt sich wie folgt erklären: Ein SMX-Mischer weist nur zwei gegeneinander um 180° verdrehte Gitter paralleler Stege auf. Diese Gitter bestehen aus Lagen äquidistanter Stege. Benachbarte Lagen sind zueinander fluchtend angeordnet. Jede Lage stellt eine Symmetrieebene dar, die bei der Mischung nicht überquert wird.

Aufgabe der Erfindung ist es einen statischen Mischer bereit zu stellen, der die gute Mischwirkung des SMX-Mischer erreicht und dies mit einem minimalen Fertigungsaufwand vereint.

Die Aufgabe wird erfindungsgemäß gelöst durch einen statischen Mischer, bestehend wenigstens aus einem Gehäuse mit einer Vielzahl von Mischerelementen, die in dem Gehäuse gestapelt angeordnet sind, dadurch gekennzeichnet, dass die Mischerelemente kammförmige ebene Elemente sind mit einem Mittelsteg auf dem beidseitig mindestens je zwei Zähne angebracht sind, wobei die benachbarten Mischerelemente um die Hauptströmungsrichtung gegeneinander um einen Winkel α verdreht angeordnet sind, so dass jeweils ein Zahn eines Mischerelementes in den Zwischenraum zwischen zwei Zähnen eines jeweils benachbarten Mischerelementes greift.

Bevorzugt beträgt der Verdrehwinkel α von 35 bis 160°, besonders bevorzugt von 45 bis 135°.

Bevorzugt ist ein statischer Mischer bei dem die Mischerelemente zu beiden Seiten ihres Mittelsteges je zwei Zähne aufweisen.

Besonders bevorzugt sind die Zähne auf dem Mittelsteg H- oder X-förmig ausgeführt.

In einer bevorzugten Ausführungsform des statischen Mischers sind die Enden der Zähne so ausgeformt, dass sie auf der Innenwand des Gehäuses glatt aufliegen. Hiermit wird die Stabilität eines z.B. losen Stapels von Mischerelementen im Gehäuse erhöht.

Eine besondere Stabilität der Packung aus Mischerelementen erreicht man, wenn sich in einer bevorzugten Bauform zwei benachbarte Mischerelemente an mindestens drei verschiedenen Stellen berühren. Hierdurch sind die Mischerelemente gegen eine Verschiebung zueinander geschützt.

In einer Ausführungsform des Mischers in der sich zusätzlich auch die jeweils übernächsten Mischerelemente berühren, wird die Stabilität weiter erhöht.

Hierdurch ergibt sich eine besonders hohe mechanische Belastbarkeit. Die Mischerelemente halten einander derart in ihrer Position, dass bei nicht endständigen H-förmigen Mischerelementen auf den Mittelsteg verzichtet werden kann.

Eine besonders bevorzugte Variante des statischen Mischers ist dadurch gekennzeichnet, dass der Mischer H-förmige Mischerelemente aufweist, wobei jeweils benachbarte H-förmige Mischerelemente um einen Winkel von 100 - 110° gegeneinander verdreht sind.

Zum einen führt ein Winkel nahe 90° zu einer guten Mischwirkung. Zum anderen lassen sich im genannten Winkelbereich die Schenkel übernächster Elemente kollisionsfrei aneinander vorbei verlängern.

Ebenfalls bevorzugt ist ein statischer Mischer, dadurch gekennzeichnet, dass der Mischer H-förmige Mischerelemente aufweist, wobei der Durchmesser des Gehäuses das 3,5 bis 5fache des Abstandes zwischen den benachbarten Schenkeln der Zähne beträgt.

In diesem Bereich ist die Mischwirkung besonders gut, da der Flüssigkeitsstrom in ähnlich große Ströme zwischen den Schenkeln des Hs und an den Außenseiten aufgeteilt wird.

Der statische Mischer eignet sich besonders für die Mischung mittel- und hochviskoser Medien z.B.

für Polymerschmelzen und -lösungen mit anderen Stoffen z.B. Zuschlags- und Farbstoffen.

Der Zusammenhalt der Mischerelemente wird weiter verbessert, wenn die benachbarten Mischerelemente in einer bevorzugten weiteren Bauform an ihren Berührungspunkten zusätzlich ineinander greifende Kerben aufweisen.

Weiter bevorzugt ist ein statischer Mischer, der dadurch gekennzeichnet ist, dass die Mischerelemente einen Mittelsteg haben, der wenigstens auf einer Seite eine Verbreiterung aufweist.

Einen Linienkontakt auf dem Mittelsteg eines übernächst angeordneten Mischerelementes ermöglicht ein besonders bevorzugter statischer Mischer, in dem die Mischerelemente einen von der Mittellage versetzten Mittelsteg aufweisen.

Besonders bevorzugt ist auch eine Variante des statischen Mischers, die dadurch gekennzeichnet ist, dass die Mischerelemente an ihren Berührungsstellen Auflageflächen haben, mit denen sich benachbarte Mischerelemente flächig berühren. Dies ist von besonderem Vorteil da der Mischereinsatz stabiler wird hinsichtlich der Kraftübertragung beim Mischen hochviskoser Produkte. Eine plastische Verformung der Mischerelemente an ihren Berührungsstellen wird damit vermieden.

Eine Erhöhung der mechanischen Stabilität wird auch erreicht, wenn die jeweils an übernächster Stelle angeordneten Mischerelemente in einer Vorzugsbauform so angebracht sind, dass sich die Außenseiten ihrer äußersten Zähne berühren.

Eine bevorzugte Form dieser Ausführung weist einen Drehwinkel $\alpha$ benachbarter Mischerelemente von 125 - 130° auf.

Weiterhin bevorzugt ist eine Variante des statischen Mischers, die dadurch gekennzeichnet ist, dass das Gehäuse ein Auflager und ggf. zusätzlich einen Niederhalter aufweist, durch den die Anordnung der Mischerelemente im Gehäuse fixiert ist.

Besonders bevorzugt ist weiterhin ein statischer Mischer, bei dem die Mischerelemente im Gehäuse voneinander lösbar gestapelt angeordnet sind.

Die Erfindung wird nachstehend anhand der Figuren beispielhaft näher erläutert.

Es zeigen:

Figur 1a      einen erfindungsgemäßen Mischer mit H-förmigen Mischerelementen in der Seitenansicht, dabei ist das Gehäuse geschnitten dargestellt.

Figur 1b      den Mischer aus Figur 1 a in der Draufsicht.

Figur 2      den Mischereinsatz des Mischers aus Figur 1a bei Blickrichtung entlang eines Mischerelementes 2d.

Figur 3a      einen erfindungsgemäßen Mischer mit X-förtnigen Mischerelementen in der Seitenansicht, dabei ist das Gehäuse geschnitten dargestellt.

Figur 3b      den Mischer aus Figur 3a in der Draufsicht.

Figur 4      einen Mischereinsatz mit Schnittflächen senkrecht zu den Elementen.

Figur 5      ein Mischerelement 2e aus Figur 4.

Figur 6      ein Mischerelement ähnlich Figur 5, bei dem am Mittelsteg 8 eine zusätzliche Stufe 9 vorhanden ist.

Figur 7      ein Mischerelement mit aus der Mitte versetztem Mittelsteg 10.

Figur 8      ein Mischerelement mit Einkerbungen.

Figuren 9a-c      ein Mischerelement mit flächiger Berührung zu nachfolgenden Elementen.

Figuren 10a,b      einen Mischer mit H-förmigen Mischerelementen, bei dem sich übernächste Elemente an den Außenflächen berühren.

Figuren 11a,b,c      einen Mischer mit Mischerelementen mit jeweils drei Zähnen 18a-c, die einen von der Mittellage versetzten Steg aufweisen, der einen Linienkontakt zu dem jeweils übernächsten Element hat.

## Beispiele

## Beispiel 1

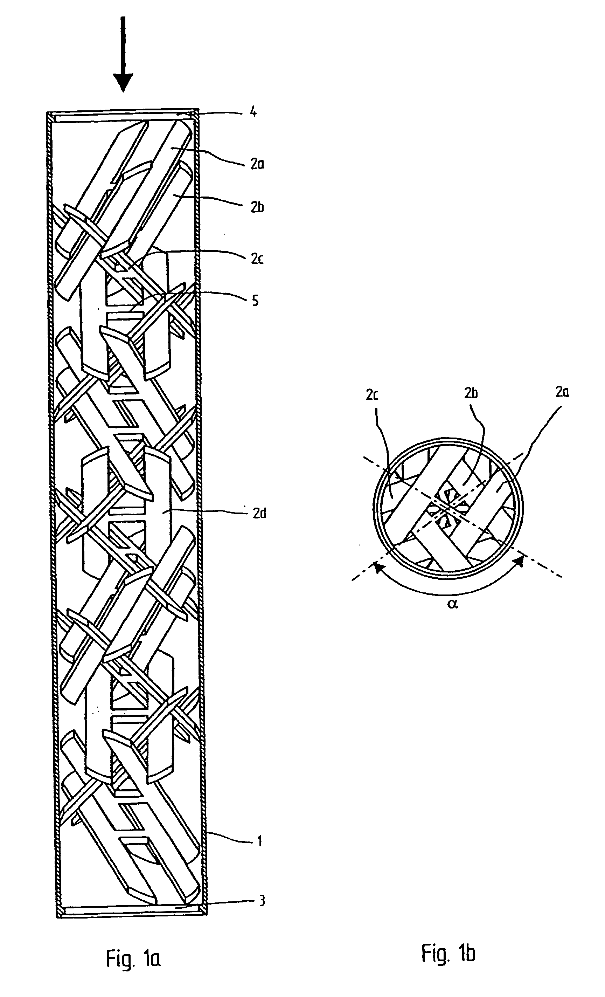

In Figur 1a ist ein erfindungsgemäßer Mischer mit H-förmigen Mischerelementen 2a, 2b, 2c in einer Seitenansicht dargestellt; dabei ist das Gehäuse 1 längs geschnitten dargestellt. Das unterste Mischerelement steht auf dem Auflager 3 auf, das hier durch eine ringförmige Innenkontur gebildet wird. Das oberste Mischerelement 2a wird nach oben durch den ringförmigen Niederhalter 4 fixiert.

Figur 1b zeigt eine Draufsicht in Richtung des Produktstroms. Der Produktstrom wird jeweils in den Figuren durch den oberen Pfeil angezeigt.

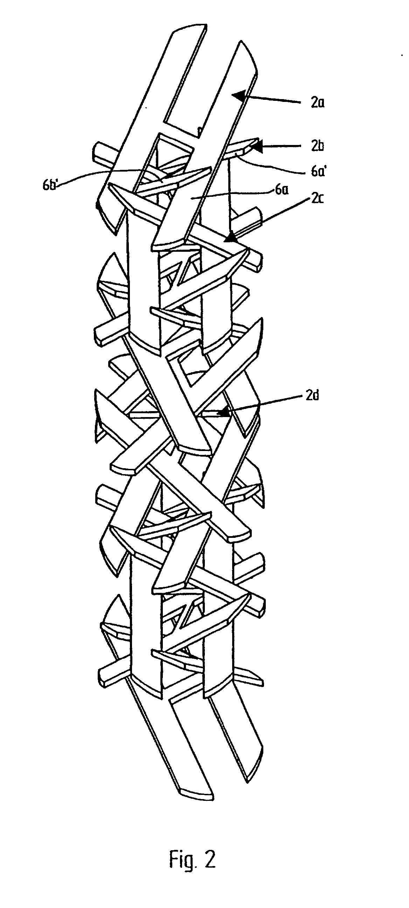

Figur 2 zeigt einen Blick entlang eines Mischerelementes 2d. Es ist zu erkennen, dass das Mischerelement 2d durch die benachbarten und nächstbenachbarten Mischerelemente in seiner Lage fixiert ist.

Dies wird durch die Verhakung der Zähne 6a, 6b, 6a' usw. erreicht.

Aufeinanderfolgende Mischerelemente 2a sind in dieser Ausführung um den in Figur 1b gezeichten Winkel $\alpha$ = 108° 11' gegeneinander verdreht.

Der Durchmesser beträgt das 3,92fache des Abstandes zwischen den Schenkeln des Mischerelementes.

Die Mischerelemente sind an den Enden der Zähne so gestaltet, dass sie glatt auf der Innenwand des Gehäuses aufliegen.

**Beispiel 2**

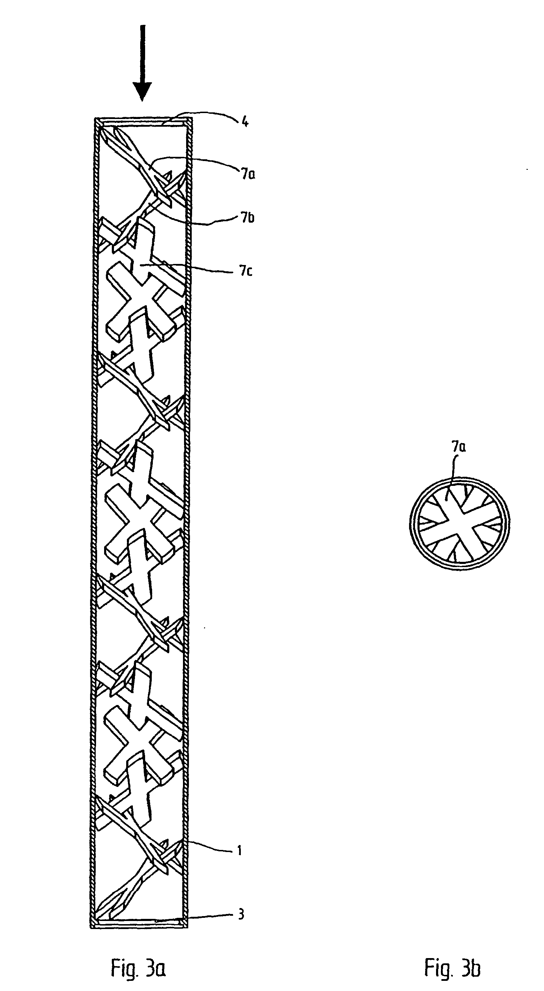

In Figur 3a ist ein erfindungsgemäßer Mischer mit X-förmigen Mischerelementen 7a, 7b, 7c in einer Seitenansicht dargestellt; dabei ist das Gehäuse geschnitten dargestellt. Auch hier fixiert die Kombination von Auflager 3 und Niederhalter 4 die dazwischen angeordnete Packung von Mischerelementen 7a, 7b, 7c.

Figur 3b zeigt eine Draufsicht auf diesen Mischer in Richtung des Produktstromes.

Hieraus ist zu erkennen, dass aufeinanderfolgende Mischerelemente um 144° gegeneinander verdreht sind.

**Beispiel 3**

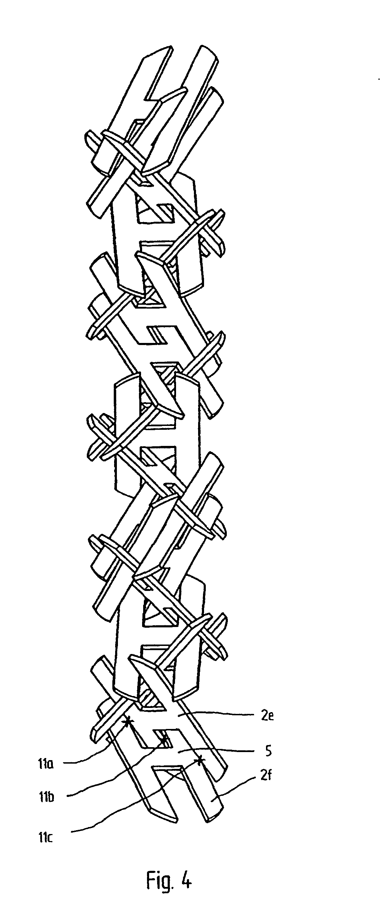

Figur 4 zeigt den Mischereinsatz eines statischen Mischers bestehend aus Mischerelementen, die aus 2 mm starken Metallblechen für ein Rohr mit einem Innendurchmesser von 50 mm ausgeführt wurden.

Im Gegensatz zum Mischereinsatz in Figur 1 (Beispiel 1) wurden die Schnittkanten nicht parallel zur Rohrachse, sondern senkrecht zum Blech gewählt, um die Fertigung zu vereinfachen. Während als Fertigungsverfahren für die Musterfertigung das Laserschneiden benutzt wurde, kann die Massenfertigung solcher Mischerelemente durch Stanzen erfolgen.

Die Breite des Mittelsteges 5 von 10 mm ist gegenüber der Variante nach Figur 1 wesentlich vergrößert, um eine höhere Festigkeit der Mischerelemente beim Gebrauch zu erreichen und eine bevorzugte Durchströmung des Mischgutes in der Rohrmitte zu vermeiden.

Der Abstand zwischen den Schenkeln der Zähne beträgt 12,9 mm, das Verhältnis des Rohrdurchmessers zu diesem Abstand 3,9. Aufeinanderfolgende Mischerelemente sind um 108° 55' gegeneinander verdreht. Jeweils übernächst angeordnete Mischerelemente berühren einander.

Die drei Berührungsstellen 11a, 11b, 11c zwischen benachbarten Mischerelementen 2e und 2f sind besonders gekennzeichnet.

**Beispiel 4**

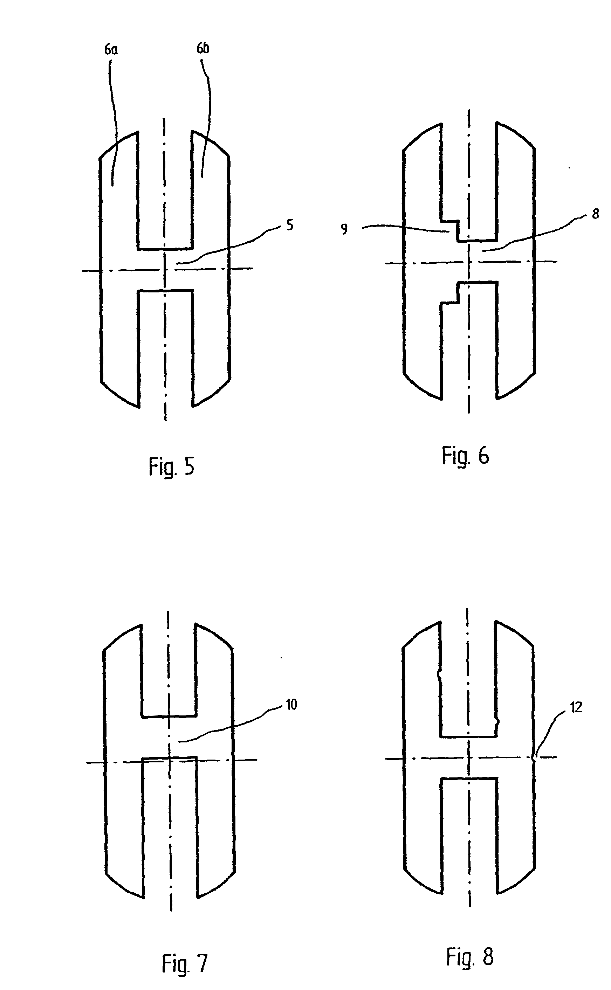

Die Figuren 5 bis 9 zeigen verschiedene Ausgestaltungen von H-förmigen Mischerelementen.

Figur 5 zeigt ein H-förmiges Mischerelement 2e aus Figur 4 mit den Zähnen 6a und 6b sowie dem Mittelsteg 5.

Figur 6 zeigt ein ebensolches Mischerelement, bei dem aber am Mittelsteg 8 eine zusätzliche Stufe 9 vorhanden ist, so dass zwischen zwei benachbarten Mischerelementen eine zusätzliche Berührungsstelle vorhanden ist, die die Montage einer Packung aus einzelnen Mischerelementen in dem Gehäuse 1 eines Mischers erleichtert.

Figur 7 zeigt ein Mischerelement mit aus der Mittellage versetztem Mittelsteg. Hiermit ergibt sich bei einer Packung im Gehäuse 1 eine zusätzliche Berührungsstelle mit einem jeweiligen Längssteg eines Nachbarmischerelementes.

Figur 8 zeigt eine Bauform eines Mischerelementes mit Einkerbungen 12 an den Berührungsstellen zum nächsten Mischerelement, die die Montage erleichtern und eine größere Stabilität bieten.

**Beispiel 5**

Bei den bisher gezeigten Mischerelementen sind alle Berührungen benachbarter Mischerelemente Punktberührungen. Dies begrenzt den zulässigen Druckabfall bei Verwendung der Mischerelemente.

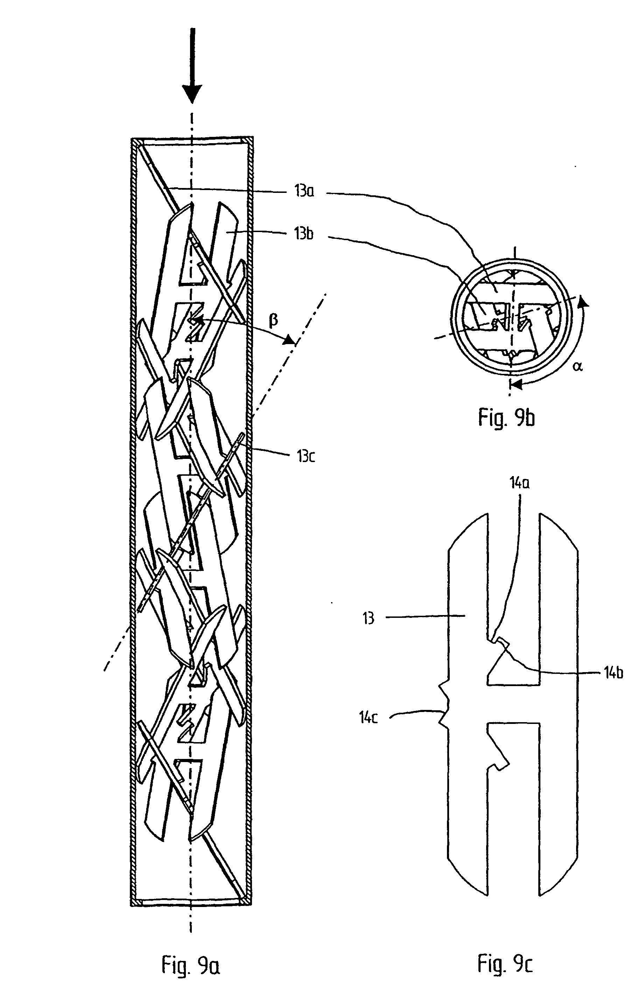

Berührungsflächen ergeben sich bei Schnittflächen, die senkrecht zu den Mischerelementen stehen, wie sie z.B. beim Stanzen entstehen, wenn die Ebenen zweier benachbarter Elemente senkrecht aufeinander stehen. Dies ist der Fall, wenn für den Winkel $\beta$ (siehe Fig. 9a) zwischen Element und Strömungsrichtung und den Winkel $\alpha$ (siehe Fig. 9b), den Verdrehwinkel um die Strömungsrichtung von Element zu Element gilt:

$$\alpha = 2 \cdot \arcsin\left(\frac{\sqrt{2}}{2 \cdot \cos(\beta)}\right)$$

Figur 9c zeigt ein Mischerelement mit besonders gestalteten Vorsprüngen, bei dem an den Flächen 14a, 14b und 14c der Vorsprünge sich beim Zusammenbau einer Mischerpackung wie in den Figuren 9a und 9b gezeigt eine flächige Berührung benachbarter Mischerelemente ergibt.

Im Beispiel beträgt der Winkel $\alpha$ 108,34° und der Winkel $\beta$ 29, 29°.

**Beispiel 6**

In den vorstehenden Ausführungen wurden Vorsprünge, Kerben und Stufen an den Zähnen der Mischerelemente 15a, 15b, 15c verwendet, um die Stabilität einer Packung insbesondere bei der Montage zu verbessern.

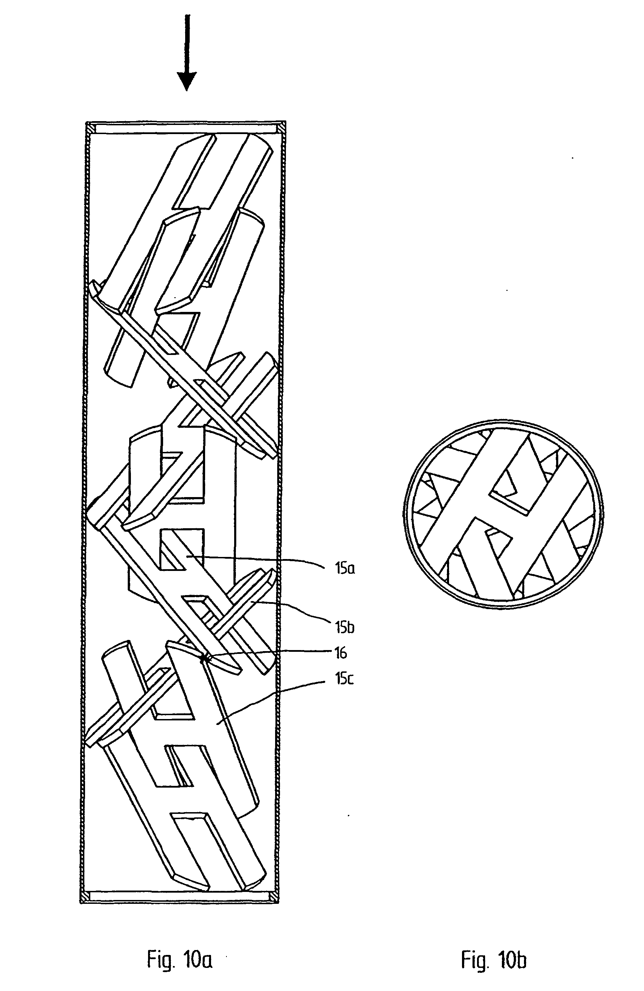

In der in den Figuren 10a und 10b gezeigten Ausführung wird dies alternativ dadurch erreicht, dass die Berührung zweier übernächster Mischerelemente an der Außenseite der Längsstege erfolgt (vgl. Berührungspunkt 16). Die entspricht einem bevorzugten Verdrehwinkel α (vgl. Fig. 1b) um die Strömungsrichtung gesehen von Mischerelement zu Mischerelement von 125° bis 130°. In der Figur 10b beträgt der Winkel α 127°.

**Beispiel 7**

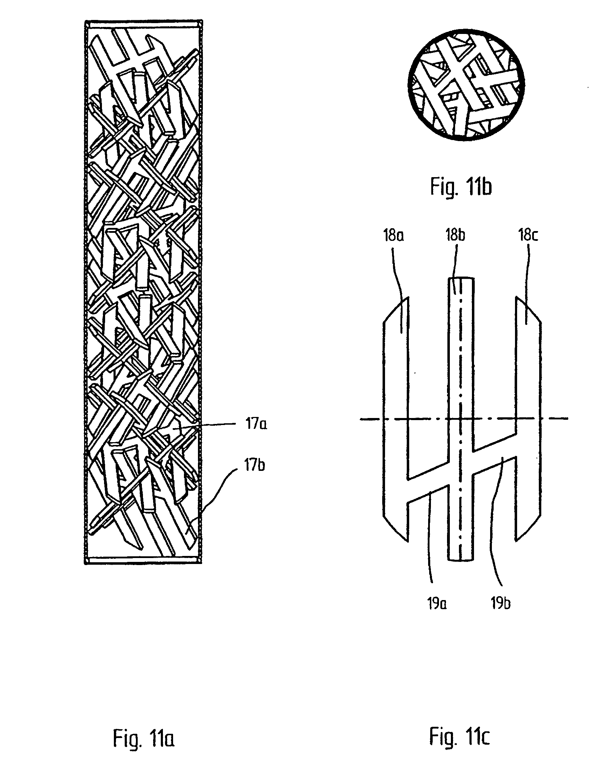

Figur 11a zeigt ein Beispiel für einen Mischer mit Mischerelementen 17a, 17b, die jeweils drei Zähne 18a-c beidseitig des Mittelsteges 19a, 19b aufweisen.

Im Beispiel beträgt der Winkel α 108,34° und der Winkel β 29,29°.

Der Mittelsteg ist außermittig angeordnet, so dass ein Element 17a mit je einem Linienkontakt auf den Abschnitten 19a, 19b des Mittelstegs des jeweils übernächsten Mischerelementes 17b in einer Mischerpackung aufliegt.

Figur 11b zeigt die Sicht auf den Mischer 1 von oben.

**Patentansprüche**

1. Statischer Mischer bestehend wenigstens aus einem Gehäuse (1) mit einer Vielzahl von Mischerelementen (2) die in dem Gehäuse (1) gestapelt angeordnet sind, wobei die Mischerelemente (2) kammförmige ebene Elemente sind mit einem Mittelsteg (5) auf dem beidseitig mindestens je zwei Zähne (6a, 6b) angebracht sind, **dadurch gekennzeichnet, dass** die benachbarten Mischerelemente (2a; 2b) um die Hauptströmungsrichtung gegeneinander um einen Winkel α verdreht angeordnet sind, so dass jeweils ein Zahn (6a) eines Mischerelementes (2a) in den Zwischenraum zwischen zwei Zähnen (6a', 6b') eines jeweils benachbarten Mischerelementes (2b) greift.

2. Statischer Mischer nach Anspruch 1, **dadurch gekennzeichnet, dass** der Verdrehwinkel α von 35 bis 160°, bevorzugt von 45 bis 135° beträgt.

3. Statischer Mischer nach Anspruch 1 oder 2, **dadurch gekennzeichnet, dass** die Mischerelemente (2a, 2b, 2c) zu beiden Seiten ihres Mittelsteges (5) je zwei Zähne (6a, 6b) aufweisen.

4. Statischer Mischer nach einem der Ansprüche 1 bis 3, **dadurch gekennzeichnet, dass** die Zähne (6a, 6b) auf dem Mittelsteg (5) H- oder X-förmig ausgeführt sind.

5. Statischer Mischer nach einem der Ansprüche 1 bis 4, **dadurch gekennzeichnet, dass** die Enden der Zähne (6a, 6b) so ausgeformt sind, dass sie auf der Innenwand des Gehäuses glatt aufliegen.

6. Statischer Mischer nach einem der Ansprüche 1 bis 5, **dadurch gekennzeichnet, dass** sich zwei benachbarte Mischerelemente (2a), (2b) an mindestens drei verschiedenen Stellen berühren.

7. Statischer Mischer nach einem der Ansprüche 1 bis 6, **dadurch gekennzeichnet, dass** sich zusätzlich auch die jeweils übernächsten Mischerelemente (2a) und (2c) berühren.

8. Statischer Mischer nach einem der Ansprüche 1 bis 7, **dadurch gekennzeichnet, dass** der Mischer H-förmige Mischerelemente (2a), (2b) aufweist, wobei jeweils benachbarte H-förmige Mischerelemente um einen Winkel α von 100 - 110 ° gegeneinander verdreht sind.

9. Statischer Mischer nach einem der Ansprüche 1 bis 8, **dadurch gekennzeichnet, dass** der Mischer H-förmige Mischerelemente (2a), (2b) aufweist, wobei der Durchmesser des Gehäuses das 3,5 bis 5fache des Abstandes zwischen den benachbarten Schenkeln der Zähne (6a, 6b) beträgt.

10. Statischer Mischer nach einem der Ansprüche 1 bis 9, **dadurch gekennzeichnet, dass** die benachbarten Mischerelemente (2a) und (2b) an ihren Berührungspunkten (11a, 11b, 11c) zusätzlich ineinander greifende Kerben (12) aufweisen.

11. Statischer Mischer nach einem der Ansprüche 1 bis 10, **dadurch gekennzeichnet, dass** die Mischerelemente (2a), (2b) einen Mittelsteg (8) haben, der wenigstens auf einer Seite eine Verbreiterung (9) aufweist.

12. Statischer Mischer nach einem der Ansprüche 1 bis 11, **dadurch gekennzeichnet, dass** die Mischerelemente (2a), (2b) einen von der Mittellage versetzten Mittelsteg (10) aufweisen.

13. Statischer Mischer nach einem der Ansprüche 1 bis 12, **dadurch gekennzeichnet, dass** die Mischerelemente (2a), (2b) an ihren Berührungsstellen Auflageflächen (14a, 14b, 14c) haben, mit denen sich benachbarte Mischerelemente (2a) und (2b) flächig berühren.

14. Statischer Mischer nach einem der Ansprüche 1 bis 13, **dadurch gekennzeichnet, dass** die jeweils an übernächster Stelle angeordneten Mischerelemente (15a) bzw. (15c) so angebracht sind, dass sich die Außenseiten ihrer äußersten Zähne berühren.

15. Statischer Mischer nach Anspruch 14, **dadurch gekennzeichnet, dass** der Verdrehwinkel α 125 bis 130° beträgt.

16. Statischer Mischer nach einem der Ansprüche 1 bis 15, **dadurch gekennzeichnet, dass** das Gehäuse (1) ein Auflager (3) und ggf. zusätzlich einen Niederhalter (4) aufweist, durch den die Anordnung der Mischerelemente (2) im Gehäuse (1) fixiert ist.

17. Statischer Mischer nach einem der Ansprüche 1 bis 16, **dadurch gekennzeichnet, dass** die Mischerelemente (2a, 2b, 2c) im Gehäuse (1) voneinander lösbar gestapelt angeordnet sind.

**Claims**

1. Static mixer, comprising at least one housing (1) having a plurality of mixer elements (2) which are arranged in a stacked formation in the housing (1), the mixer elements (2) being flat comb-like elements having a central web (5) to each side of which at least two teeth (6a, 6b) are attached, **characterised in that** adjacent mixer elements (2a; 2b) are rotated with respect to one another through an angle α around the main flow direction, so that a tooth (6a) of a mixer element (2a) engages in each case in the gap between two teeth (6a', 6b') of an adjacent mixer element (2b).

2. Static mixer according to claim 1, **characterised in that** the angle of rotation α is from 35 to 160°, preferably from 45 to 135°.

3. Static mixer according to claim 1 or 2, **characterised in that** the mixer elements (2a, 2b, 2c) have two teeth (6a, 6b) on each side of their central web (5).

4. Static mixer according to any one of claims 1 to 3, **characterised in that** the teeth (6a, 6b) on the central web (5) have an H-shaped or X-shaped configuration.

5. Static mixer according to any one of claims 1 to 4, **characterised in that** the ends of the teeth (6a, 6b) are so formed that they are in the flush abutment to the internal wall of the housing.

6. Static mixer according to any one of claims 1 to 5, **characterised in that** two adjacent mixer elements (2a), (2b) are in contact with one another at not less than three different locations.

7. Static mixer according to any one of claims 1 to 6, **characterised in that** in each case the next mixer elements but one (2a) and (2c) are additionally in contact with one another.

8. Static mixer according to any one of claims 1 to 7, **characterised in that** the mixer has H-shaped mixer elements (2a), (2b), adjacent H-shaped mixer elements being in each case rotated through an angle α of 100-110° with respect to one another.

9. Static mixer according to any one of claims 1 to 8, **characterised in that** the mixer has H-shaped mixer elements (2a), (2b), the diameter of the housing being 3.5 to 5 times the distance between the adjacent limbs of the teeth (6a, 6b).

10. Static mixer according to any one of claims 1 to 9, **characterised in that** the adjacent mixer elements (2a) and (2b) additionally have inter-engaging notches (12) at their points of contact (11a, 11b, 11c).

11. Static mixer according to any one of claims 1 to 10, **characterised in that** the mixer elements (2a), (2b) have a central web (8) which has a widened portion (9) on at least one side.

12. Static mixer according to any one of claims 1 to 11, **characterised in that** the mixer elements (2a), (2b) have a central web (10) which is offset from the central position.

13. Static mixer according to any one of claims 1 to 12, **characterised in that** the mixer elements (2a), (2b) have at their contact sites abutment faces (14a, 14b, 14c) with which adjacent mixer elements (2a) and (2b) are in planar contact with one another.

14. Static mixer according to any one of claims 1 to 13, **characterised in that** the mixer elements (15a), (15c) arranged at the next position but one are in each case so fitted that the outer faces of their outermost teeth are in contact with one another.

15. Static mixer according to claim 14, **characterised in that** the angle of rotation α is 125 to 130°.

16. Static mixer according to any one of claims 1 to 15, **characterised in that** the housing (1) has a base and optionally additionally a retaining element (4) by which the arrangement of mixer elements (2) is fixed in the housing (1).

17. Static mixer according to any one of claims 1 to 16, **characterised in that** the mixer elements (2a, 2b, 2c) are stacked in the housing (1) detachably from one another.

## Revendications

1.  Mélangeur statique, constitué d'au moins une enveloppe (1) avec un grand nombre d'éléments mélangeurs (2) qui sont disposés empilés dans l'enveloppe (1), les éléments mélangeurs (2) étant des éléments plats en forme de peigne avec une nervure centrale (5), sur laquelle au moins deux dents (6a, 6b) sont fixées de chaque côté, **caractérisé en ce que** les éléments mélangeurs adjacents (2a; 2b) sont disposés décalés l'un par rapport à l'autre d'un angle $\alpha$ dans la direction d'écoulement principale, de sorte qu'une dent (6a) d'un élément mélangeur (2a) fait chaque fois prise dans l'espace intermédiaire entre deux dents (6a', 6b') d'un élément mélangeur adjacent (2b) respectif.

2.  Mélangeur statique suivant la revendication 1, **caractérisé en ce que** l'angle de décalage $\alpha$ est de 35 à 160°, de préférence de 45 à 135°.

3.  Mélangeur statique suivant la revendication 1 ou 2, **caractérisé en ce que** les éléments mélangeurs (2a, 2b, 2c) présentent chacun deux dents (6a, 6b) des deux côtés de leur nervure centrale (5).

4.  Mélangeur statique suivant l'une des revendications 1 à 3, **caractérisé en ce que** les dents (6a, 6b) sur la nervure centrale (5) sont réalisées en forme de H ou de X.

5.  Mélangeur statique suivant l'une des revendications 1 à 4, **caractérisé en ce que** les extrémités des dents (6a, 6b) ont une forme telle qu'elle reposent à plat sur la paroi intérieure de l'enveloppe.

6.  Mélangeur statique suivant l'une des revendications 1 à 5, **caractérisé en ce que** deux éléments mélangeurs adjacents (2a), (2b) se touchent en au moins trois endroits différents.

7.  Mélangeur statique suivant l'une des revendications 1 à 6, **caractérisé en ce qu'**en plus les éléments mélangeurs situés deux emplacements plus loin (2a) et (2b) se touchent également.

8.  Mélangeur statique suivant l'une des revendications 1 à 7, **caractérisé en ce que** le mélangeur présente des éléments mélangeurs en forme de H (2a), (2b), les éléments mélangeurs en forme de H respectivement adjacents étant décalés l'un par rapport à l'autre d'un angle $\alpha$ de 100 - 110°.

9.  Mélangeur statique suivant l'une des revendications 1 à 8, **caractérisé en ce que** le mélangeur présente des éléments mélangeurs en forme de H (2a), (2b), le diamètre de l'enveloppe étant égal à 3,5 à 5 fois la distance entre les jambes adjacentes des dents (6a, 6b).

10. Mélangeur statique suivant l'une des revendications 1 à 9, **caractérisé en ce que** les éléments mélangeurs adjacents (2a) et (2b) présentent en plus à leurs points de contact (11a, 11b, 11c) des encoches (12) faisant prise l'une dans l'autre.

11. Mélangeur statique suivant l'une des revendications 1 à 10, **caractérisé en ce que** les éléments mélangeurs (2a), (2b) ont une nervure centrale (8), qui présente un élargissement (9) au moins sur un côté.

12. Mélangeur statique suivant l'une des revendications 1 à 11, **caractérisé en ce que** les éléments mélangeurs (2a), (2b) présentent une nervure centrale (10) décalée de la position centrale.

13. Mélangeur statique suivant l'une des revendications 1 à 12, **caractérisé en ce que** les éléments mélangeurs (2a) et (2b) ont à leurs points de contact des surfaces d'appui (14a, 14b, 14c), par lesquelles des éléments mélangeurs adjacents (2a) et (2b) se touchent à pleine surface.

14. Mélangeur statique suivant l'une des revendications 1 à 13, **caractérisé en ce que** les éléments mélangeurs (15a) et (15c) respectivement disposés deux emplacements plus loin sont disposés de telle façon que les faces extérieures de leurs dents les plus extérieures se touchent.

15. Mélangeur statique suivant la revendication 14, **caractérisé en ce que** l'angle de décalage $\alpha$ est de 125 à 130°.

16. Mélangeur statique suivant l'une des revendications 1 à 15, **caractérisé en ce que** l'enveloppe (1) présente un appui (3) et le cas échéant également un serre-flanc (4), par lequel l'arrangement des éléments mélangeurs (2) est fixé dans l'enveloppe (1).

17. Mélangeur statique suivant l'une des revendications 1 à 16, **caractérisé en ce que** les éléments mélangeurs (2a, 2b, 2c) sont empilés dans l'enveloppe (1) de manière permettant de les détacher l'un de l'autre.

Fig. 1a

Fig. 1b

Fig. 2

Fig. 3a

Fig. 3b

Fig. 4

Fig. 5

Fig. 6

Fig. 7

Fig. 8

Fig. 9b

Fig. 9a

Fig. 9c

Fig. 10a

Fig. 10b

17a

17b

Fig. 11a

18a    18b    18c

19a    19b

Fig. 11b

Fig. 11c